# NEUE EUROPÄISCHE PATENTSCHRIFT

(11) **EP 0 556 191 B2**
(45) Veröffentlichungstag und Bekanntmachung des Hinweises auf die Entscheidung über den Einspruch: **23.05.2001**
(45) Hinweis auf die Patenterteilung: 09.08.1995
(21) Anmeldenummer: 91916333.7
(22) Anmeldetag: 11.09.1991
(51) Int. Cl.: H02H 3/44, H02H 7/08

(54) **SCHALTUNGSANORDNUNG ZUR STEUERUNG EINES STELLMOTORS**
SERVOMOTOR-CONTROL CIRCUIT
CIRCUIT POUR LA COMMANDE D'UN SERVOMOTEUR

(30) Priorität: 05.11.1990 DE 4035067
(43) Veröffentlichungstag der Anmeldung: 25.08.1993
(73) Patentinhaber: Continental Teves AG & Co. oHG, 60488 Frankfurt (DE)
(72) Erfinder: ENGELMANN, Mario, D-6392 Neu-Anspach 1 (DE); SPORNITZ, Lothar, D-6000 Frankfurt/Main 60 (DE); ZYDEK, Michael, D-6230 Frankfurt/Main 80 (DE)
(86) Internationale Anmeldenummer: EP9101726
(87) Internationale Veröffentlichungsnummer: WO9208267

(56) Entgegenhaltungen:
- DE-A- 3 836 516
- DE-A1- 3 007 464
- DE-C2- 3 338 764
- DE-C2- 3 842 921
- GB-A- 2 020 928
- GB-A- 2 056 799

## Beschreibung

Die Erfindung bezieht sich auf eine Schaltungsanordnung zur Steuerung eines Stellmotors, insbesondere des Stellmotors eines Kraftfahrzeug-Regelungsystems, mit Hilfe von Strompulsen, die eine stromgeregelte Endstufe liefert, welche einen geschalteten Leistungstransistor und eine Strommeßeinrichtung umfaßt. Es handelt sich dabei beispielsweise um den Drosselklappen-Stellmotor eines Antriebsschlupfregelungssystems.

Der Kurzschluß eines solchen Stellmotors gegen die Spannungsquelle, z.B. gegen das Bordnetz eines Kraftfahrzeugs, ist bei Ansteuerung des Motors über eine stromgeregelte Endstufe schwer erkennbar, weil auch bei kurzgeschlossenem Motor der Strom-Istwert infolge der Regelung dem Strom-Sollwert entspricht. Zur Kurzschlußerkennung könnte man anstelle einer Strommessung z.B. die Spannung über der Endstufe überwachen. Bei intaktem Motor und Ansteuerung über einen Transistor würde diese Spannung auf die Sättigungsspannung des Transistors sinken. Bei einem Kurzschluß oder Nebenschluß innerhalb des Motors wäre der Spannungsabfall erheblich höher als im Normalbetrieb. Der zusätzliche Aufwand für eine solche Sättigungsspannungsüberwachung ist jedoch keineswegs unerheblich.

Eine Schaltungsanordnung der eingangs genannten Art, die beispielsweise zur Steuerung des batteriegetriebenen Gleichstrommotors eines tragbaren Werkzeugs dient, ist bereits aus der DE 38 36 516 A1 bekannt. Der Motorstrom wird mit dieser Schaltungsanordnung durch Ein- und Ausschalten eines in Serie geschalteten Feldeffekttransistors mit Hilfe eines impulsbreitenmodulierten Gate-Signals gesteuert. Eine Überlastschutzschaltung fühlt den Motorstrom ab, integriert das abgefühlte Signal und vergleicht das Ergebnis mit einer Spannung, die eine Zenerdiode vorgibt.

In der DE 33 18 909 C2 ist bereits eine Fehlererfassungseinrichtung für eine Motorregelungsschaltung beschrieben, die einen der Stromquelle parallel geschalteten Spannungsteiler und eine Vergleicherschaltung aufweist Diese Vergleicherschaltung überwacht die Spannung an einem Spannungsteilerpunkt und erzeugt ein Fehlersignal, wenn diese Spannung infolge eines Fehlers (Verschweißung von Kontakten, Kurzschluß in der Elektronik) auf einen Wert außerhalb eines vorbestimmten Spannungsbereichs ansteigt oder absinkt.

Zur Drehzahlsteuerung eines Reihenschlußmotors mit Drehmomentabschaltung, der zum Antrieb eines handgeführten Elektrowerkzeuges dient, ist in der Offenlegungsschrift DE 38 19 166 A1 eine Schaltungsanordnung beschrieben, die den Motor bei Auftreten eines bestimmten Gegendrehmomentes abschaltet. Der aufgenommene Motorstrom wird dabei als Abbild des abgegebenen Drehmomentes gemessen und ausgewertet.

Eine Schutzschaltungs-Vorrichtung nach der Offenlegungsschrift DE 30 42 138 A1, die als Überlastschutz bei einem Blockieren eines Aufwickel-Gleichstrommotors dient, löst eine Abschaltung aus, wenn ein überhöhter, über eine vorgegebene Zeitspanne andauernder Motorstrom festgestellt wird.

Ferner ist aus der Offenlegungsschrift DE 27 36 304 A1 eine Vorrichtung zur Einstellung des Stromes von einer Batterie zu einem Elektromotor bekannt, die die Stromzufuhr zu dem Elektromotor abschaltet, wenn ein Motorstromimpuls, jedoch kein Steuerimpuls des zugehörigen Impulssteuergerätes auftritt

Schließlich ist in der Offenlegungsschrift DE 37 27 498 A1 eine Vorrichtung zum Steuern der Leistung eines elektrischen Verbrauchers beschrieben, die eine Kurzschlußüberwachung aufweist. Hierzu wird die Sättigungsspannung eines Halbleiterschalters überwacht, die einen bestimmten Wert überschreitet, wenn Kurzschluß vorliegt

Der Erfindung liegt daher die Aufgabe zugrunde, ein einfache, wenig Aufwand benötigende Schaltungsanordnung zu entwickeln, mit der sich zuverlässig ein Kurzschluß oder Nebenschluß im Stellmotor oder in dessen Zuleitung gegenüber dem Bordnetz erkennen läßt.

Es hat sich herausgestellt, daß diese Aufgabe mit der im Anspruch 1 beschriebenen Schaltungsanordnung gelöst werden kann, deren Besonderheit darin besteht, daß der innerhalb einer vorgegebenen kurzen Zeitspanne nach Ansteuern der Endstufe durch den Leistungstransistor fließende Strom zum Erkennen eines Kurzschlusses oder Nebenschlusses in dem Stellmotor oder in dessen Zuleitung ausgewertet wird.

Die Erfindung beruht auf der Erkenntnis, daß bei intaktem Motor der Stromanstieg in der Motorwicklung durch die hohe Induktivität des Stellmotors bestimmt wird. Ein Kurzschluß oder Nebenschluß hat daher eine erhebliche Verringerung der Induktivität und dadurch ein wesentlich schnelleres Ansteigen des nach dem Einschalten der Endstufe über diese Endstufe fließenden Stromes zur Folge. Da ohnehin bei stromgeregelten Endstufen, beispielsweise bei einer Regelung mit breitenmodulierten Strompulsen, eine Strommeßeinrichtung vorhanden sein muß, läßt sich auf Basis dieser Überlegung durch Messen des Stromanstiegverhaltens eine Kurzschlußüberwachung ohne jeglichen oder höchstens mit geringem Mehraufwand realisieren.

Nach einer vorteilhaften Auführungsart der Erfindung wird der Spitzenwert des innerhalb der vorgegebenen kurzen Zeitspanne nach Ansteuern des Leistungstransistors gemessenen, durch den Leistungstransistor fließenden Stromes zur Erkennung eines Kurzschlusses oder Nebenschlusses ausgewertet. Die vorgegebene Zeitspanne liegt vorzugsweise in einem Bereich zwischen 10 und 100 µs.

In manchen Fällen hat es sich als vorteilhaft erwiesen, zur Kurzschlußüberwachung die Endstufe regelmäßig mit Testpulsen anzusteuern, die so kurz im Vergleich zu der elektromechanischen Zeitkonstanten des Stellmotors sind, daß sie noch keine Reaktion des Stellmotors hervorrufen. Auf diese Weise wird eine ständige Kurzschlußüberwachung und sofortige Anzeige eines eventuellen Fehlers erreicht.

Weitere Merkmale, Vorteile und Anwendungsmöglichkeiten der Erfindung gehen aus der folgenden Schilderung eines Ausführungsbeispieles an Hand der beigefügten Abbildungen hervor.

Es zeigen
- Fig. 1: in schematischer Blockdarstellung den prinzipiellen Aufbau einer Schaltungsanordnung nach der Erfindung und
- Fig. 2: im Diagramm das Stromanstiegsverhalten im Normalbetrieb und bei einem Kurzschluß.

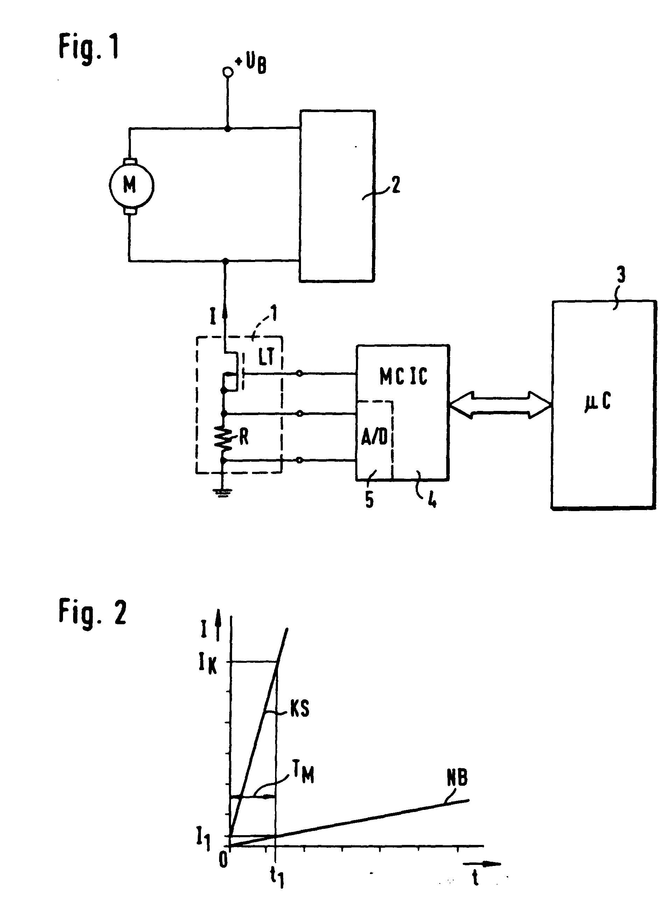

In Figur 1 ist ein Stellmotor M wiedergegeben, der beispielsweise zur Steuerung der (nicht dargestellten) Drosselklappe eines Kraftfahrzeug-Antriebsmotors dient und Bestandteil eines Antriebsschlupfregelungssystems ist. Zur Stromversorgung ist der Stellenmotor M einerseits an die positive Klemme der Fahrzeugbatterie, symbolisiert durch +U_{B}, und andererseits an eine Endstufe 1 eines Regelungssystems angeschlossen. Eine Freilaufklemmschaltung 2 verhindert in bekannter Weise das Entstehen zu hoher Überspannungen beim Abschalten des Stellmotors M und schützt dadurch die Endstufe 1.

Der Stellmotor M wird in dem hier beschriebenen Beispiel eines Drosselklappenstellmotors eines Antriebsschlupfregelungssystems durch breitenmudulierten Strompulse gesteuert. Hierzu ist die Endstufe 1 mit einem geschalteten Leistungstransistor LT und einem niederohmigen Strommeßwiderstand R ausgerüstet. Gesteuert wird der Endstufentransistor LT von einem Mikrocontroller 3, in dem in bekannter Weise aus den Informationen, die mit Hilfe von Sensoren gewonnenen wurden, die Sollstellung der Drosselklappe errechnet und entsprechende Stellbefehle abgeleitet werden. Der Mikrocontroller 3 ist über eine Schnittstelle 4, die hier als Motor-Control-IC (MCIC) bezeichnet ist, mit der Endstufe 1 verbunden. Ein gestrichelt abgegrenzter Teil der Schaltung 4 symbolisiert einen Analog/Digital-Wandler A/D. Mit diesem Wandler werden die von dem Meßwiderstand R abgegriffenen analogen Signale, die dem tatsächlichen Stromfluß proportional sind, in entsprechende Digitalsignale gewandelt. Anschließend werden die Digitalsignale gespeichert und im Mikrocontroller 3 ausgewertet.

Fig. 2 veranschaulicht das unterschiedliche Stromanstiegsverhalten im Normalbetrieb (Kennlinie NB) bzw. beim Einschalten eines intakten Stellmotors M im Vergleich zum Stromanstiegsverhalten bei Kurzschluß (Kennlinie KS) oder einem Nebenschluß.

Erfindungsgemäß wird nun beim Einschalten des Stellmotors M bzw. Durchsteuern des Transistors LT der Endstufe 1 nach Verstreichen einer bestimmten vorgegebenen Zeitspanne T_{M} das Stromanstiegsverhalten festgestellt Ist zum Zeitpunkt t₁ der Strom auf I₁ angewachsen, ist dies ein Indiz für ein intaktes System. Wird jedoch nach der Zeitspanne T_{M} bzw. zum Zeitpunkt t₁ ein Strom I_{K} gemessen, zeigt dies an, daß ein Kurzschluß zwischen der Zuleitung des Stellmotors M bzw zwischen dem Ausgang der Endstufe 1 und dem Bordnetz +U_{B} besteht. Die Induktivität des Stellmotors M würde sonst einen Anstieg des Stromes auf I_{K} innerhalb der Meßzeitspanne T_{M} verhindern.

Ein Kurzschluß - oder ein Nebenschluß, der zu einem deutlich höheren Strom als im Normalbetrieb NB führt- läßt sich also durch die Auswertung des Stromanstiegsverhaltens klar erkennen. Da, wie bereits erwähnt, eine Strommessung über einen Strommeßwiderstand R und einen A/D-Wandler ohnehin bei einem Regelungssystem der hier beschriebenen Art benötigt wird, läßt sich die erfindungsgemäße Kurzschlußüberwachung ohne nennenswerten Mehraufwand realisieren.

## Patentansprüche

1. Schaltungsanordnung zur Steuerung eines Stellmotors, insbesondere des Stellmotors (M) eines Kraftfahrzeug-Regelungsystems, mit Hilfe von Strompulsen, die eine stromgeregelte Endstufe (1) liefert, welche einen geschalteten Leistungstransistor (LT) und eine Strommeßeinrichtung (R, 5) mit einem Strommeßwiderstand (R) umfaßt, an dem eine Meßspannung auftritt, die Rückschlüsse auf den zu messenden Strom zuläßt, wobei der Strommeßwiderstand (R) von dem durch den Leistungstransistor (LT) fließenden Strom durchflossen wird, dadurch **gekennzeichnet,** daß das Stromanstiegsverhalten innerhalb einer vorgegebenen kurzen Zeitspanne (T_{M}), in der bei intaktem Motor der Stromanstieg durch die Induktivität des Stellmotors (M) bestimmt wird, durch Messung der nach Ansteuern der Endstufe (1) an dem Strommeßwiderstand (R) abfallenden Spannung festgestellt und zum Erkennen eines Kurzschlusses oder Nebenschlusses in dem Stellmotor (M) oder in dessen Zuleitung ausgewertet wird.

2. Schaltungsanordnung nach Anspruch 1, dadurch **gekennzeichnet,** daß der Spitzenwert des innerhalb der vorgegebenen kurzen Zeitspanne (T_{M}) nach Ansteuern des Leistungstransistors (LT) gemessenen, durch den Leistungstransistor (LT) fließenden Stromes (I) zur Erkennung eines Kurzschlusses oder Nebenschlusses ausgewertet wird.

3. Schaltungsanordnung nach Anspruch nach 1 oder 2, dadurch **gekennzeichnet,** daß die vorgegebene Zeitspanne (T_{M}) in Bereich zwischen 10 und 100 Mikrosekunden liegt.

4. Schaltungsanordnung nach einem oder mehreren der Ansprüche 1-3, dadurch **gekennzeichnet,** daß zur Kurzschlußüberwachung die Endstufe (1) regelmäßig mit Testpulsen angesteuert wird, die so kurz im Vergleich zu der elektromechanischen Zeitkonstanten des Stellmotors (M) sind, daß sie zu keiner Reaktion des Stellmotors (M) führen.

## Claims

1. A circuit configuration for controlling a servomotor, more particularly, the servomotor (M) of a control system of automotive vehicles, by means of current pulses which are supplied by a current-controlled final stage (1) that includes a switched power transistor (LT) and a current meter (R, 5) with a current measuring resistance (R) on which a measuring voltage occurs from which the current being measured can be inferred, and the current that flows through the power transistor (LT) flows through the current measuring resistance (R),
**characterized** in that the behaviour of current rise within a period of time (T_{M}) of predetermined short duration, in which the current rise is determined by the inductance of the servomotor (M), with the motor intact, is detected by measuring the voltage that declines on the current measuring resistance (R) after actuation of the final stage (1), and is evaluated for identifying a short circuit or shunt event in the servomotor (M) or said's supply line.

2. A circuit configuration as claimed in claim 1,
**characterized** in that the peak value of the current (I) flowing through the power transistor (LT) and measured within the period of time (T_{M}) of predetermined short duration, after the power transistor (LT) has been placed in the saturated state, is evaluated for identifying a short circuit or shunt event.

3. A circuit configuration as claimed in claim 1 or claim 2,
**characterized** in that the predetermined period of time (T_{M}) is in the range of between 10 and 100 microseconds.

4. A circuit configuration as claimed in any one or more of claims 1 to 3,
**characterized** in that for short circuit monitoring, the final stage (1) is regularly actuated by test pulses of a length short enough, as compared to the electromechanical time constants of the servomotor (M), to cause the servomotor (M) not to respond.

## Revendications

1. Agencement de circuit permettant de commander un moteur pas-à-pas, notamment le moteur pas-à-pas (M) d'un système de régulation de véhicule automobile, au moyen d'impulsions de courant que délivre un étage final (1) à régulation de courant qui comprend un transistor de puissance (LT) et un dispositif de mesure de courant (R, 5) ayant une résistance de mesure de courant (R), à laquelle une tension de mesure apparaît, qui permet des conclusions sur le courant devant être mesuré, la résistance de mesure de courant (R) étant parcourue par le courant qui traverse le transistor de puissance (LT), caractérisé en ce que le comportement d'accroissement de courant au cours d'une brève période de temps (T_{M}) préfixée dans laquelle, lorsque le moteur est en bon état, l'accroissement de courant est déterminé par l'inductance du moteur pas-à-pas (M), est déterminé par mesure de la tension qui apparaît sur la résistance de mesure de courant (R) à la suite d'une commande de l'étage final (1), et est exploité pour reconnaître un court-circuit ou une dérivation de circuit dans le moteur pas-à-pas (M) ou dans la ligne d'alimentation de ce dernier.

2. Agencement de circuit selon la revendication 1, caractérisé en ce que la valeur de pointe du courant (I) passant par le transistor de puissance (LT) et mesuré au cours d'une brève période de temps préfixée (T_{M}) à la suite d'une commande du transistor de puissance (LT) est exploité pour reconnaître un court-circuit ou une dérivation de circuit.

3. Agencement de circuit selon la revendication 1 ou 2, caractérisé en ce que la période de temps préfixée (T_{M}) est comprise dans l'intervalle de valeurs de 10 à 100 microsecondes.

4. Agencement de circuit selon une ou plusieurs des revendications 1 à 3, caractérisé en ce que, pour la surveillance des courts-circuits, l'étage final (1) est commandé d'une manière régulière au moyen d'impulsions de test qui sont si brèves en comparaison de la constante de temps électromécanique du moteur pas-à-pas (M), qu'elles n'entraînent aucune réaction du moteur pas-à-pas (M).
